Europäisches Patentamt

European Patent Office

Office européen des brevets

(11) Publication number: **0 203 783 B1**

# EUROPEAN PATENT SPECIFICATION

(45) Date of publication of patent specification: **26.08.92**    (51) Int. Cl.⁵: **G11B 31/00**

(21) Application number: **86303900.4**

(22) Date of filing: **22.05.86**

(54) **Video tape recorder having built-in camera.**

(30) Priority: **27.05.85 JP 78896/85**
**27.05.85 JP 78897/85**
**27.05.85 JP 78898/85**
**27.05.85 JP 78899/85**

(43) Date of publication of application:
**03.12.86 Bulletin  86/49**

(45) Publication of the grant of the patent:
**26.08.92 Bulletin  92/35**

(84) Designated Contracting States:
**DE FR GB NL**

(56) References cited:
**EP-A- 0 131 799**
**US-A- 4 499 504**
**US-A- 4 550 343**

(73) Proprietor: **SONY CORPORATION**
**7-35 Kitashinagawa 6-chome Shinagawa-ku**
**Tokyo 141(JP)**

(72) Inventor: **Inada, Shinsaku c/o Patents Division**
**Sony Corp.**
**6-7-35 Kitashinagawa**
**Shinagawa-ku Tokyo 141(JP)**
Inventor: **Ohshima, Eiji c/o Patents Division**
**Sony Corp.**
**6-7-35 Kitashinagawa**
**Shinagawa-ku Tokyo 141(JP)**
Inventor: **Io, Hideaki c/o Patents Division**
**Sony Corp.**
**6-7-35 Kitashinagawa**
**Shinagawa-ku Tokyo 141(JP)**
Inventor: **Morikawa, Masayoshi c/o Patents Division Sony Cor**
**6-7-35 Kitashinagawa**
**Shinagawa-ku Tokyo 141(JP)**

(74) Representative: **Purvis, William Michael Cameron et al**
**D. Young & Co. 10 Staple Inn**
**London WC1V 7RD(GB)**

## Description

The invention relates generally to a video tape recorder with a camera and more particularly is directed to a video tape recorder having a built-in camera.

In a known home video tape recorder having a built-in camera, the user generally holds a hand grip portion of this built-in camera type video tape recorder with his right hand during taking video images.

In prior art video tape recorders with a built-in camera, the hand grip portion is provided on a side wall of the video tape recorder. This causes the overall thickness of the video tape recorder to be relatively large. As a result, when the user carries this video tape recorder having a built-in camera in a non-operation mode, the video tape recorder cannot be put into a case such as an attache case or the like that is relatively thin. Then, there arises a problem that the user has to carry this video tape recorder separately to an attache case.

Further, in the conventional built-in camera type video tape recorder, a television camera section, a video tape recorder section and a view finder section are substantially formed in a combination form as single units. The operational modes or status of the television camera section and the video tape recorder section can be displayed in an optical type view finder or electronic type view finder.

When a built-in camera type video tape recorder is designed to be small in size and is intended to be readily portable, the television camera section and the video tape recorder section are preferably formed into a combination form as a main body and a hand grip is formed to include therein an optical type view finder and a battery. When both the main body and the hand grip section are coupled together to take a video picture, the problem arises that the operational status of the television camera section and the video tape recorder section cannot be optically displayed within the optical type view finder.

Of course, if a plurality of electrical contacts are provided on the main body and the hand grip section so as to be contacted with one another when the main body and the hand grip are coupled together, it becomes possible to display the operational status of the television camera section and the video tape recorder section using light emission elements such as LEDs (light emission diodes) located within the optical type view finder. However, in this case, there occur further problems that the electrical contacts will easily mal-function, thus reducing the reliability of the built-in camera type video tape recorder.

Patent Specification USA 4 499 504 discloses a combination VTR and camera with a detachable grip which can be attached to the camera body during filming to assist the user to hold the camera, the grip having a trigger button and a battery therein to control operation of the camera.

Patent Specification EP-A-131 799 discloses a viewfinder detachably mounted on a main body of a video camera.

According to the invention there is provided a video tape recorder having a built-in camera comprising:

a main body having a video tape recorder and a television camera;

a hand grip portion carrying a battery to supply operational power to the video tape recorder and the television camera;

coupling means detachably to mount the hand grip portion on a side wall of the main body; characterised by the hand grip portion carrying a view finder; said mounting being effected by relative sliding of the hand grip in the direction of the side wall; and

locking means to lock the coupling means, the locking means being releasable by a slide that is accessible from the exterior of the hand grip portion.

By making the hand grip portion readily detachable from the main body, the overall thickness of the built-in camera type video tape recorder can be reduced for carrying and thereby the built-in camera type video tape recorder can be carried or stored in a case and be suitable for portable use.

The view finder and a battery are incorporated in the hand grip portion and the main body and the hand grip portion are detachable from each other at their side walls after releasing the locking means.

Various operational status in the main body can be optically displayed by an optical type status indication section provided at the face at which the hand grip portion is detachable from the main body.

A light guide section can be mounted on a face at which the hand grip portion is detachable from the main body, whereby the optical display of an optical type status indication section can be carried out within an optical type view finder incorporated in the hand grip portion.

The invention is diagrammatically illustrated by way of example with reference to the accompanying drawings, in which:-

Figure 1 is a perspective view of an embodiment of a video tape recorder having a built-in camera according to the invention, seen from its right-front direction;

Figure 2 is a like perspective view of the embodiment of Figure 1 seen from its left-front direction;

Figure 3 is a perspective view of the embodiment of Figures 1 and 2 seen from its right-rear direction;

Figure 4 is a perspective view of a main body of the embodiment of Figures 1 to 3 seen from its right-rear direction;

Figure 5 is a perspective view of a hand grip portion of the embodiment of Figures 1 to 4 seen from its left-rear direction;

Figure 6 is a partly sectioned view showing the state that the main body and the hand grip portion are coupled with each other;

Figure 7 is a diagram used to explain the status of an optical type view finder when a user looks into it;

Figure 8 is a schematic perspective view showing the relationship between a dust-proof cover and a lens of the television camera section; and

Figure 9 is a circuit diagram showing a control circuit that controls a micro-computer.

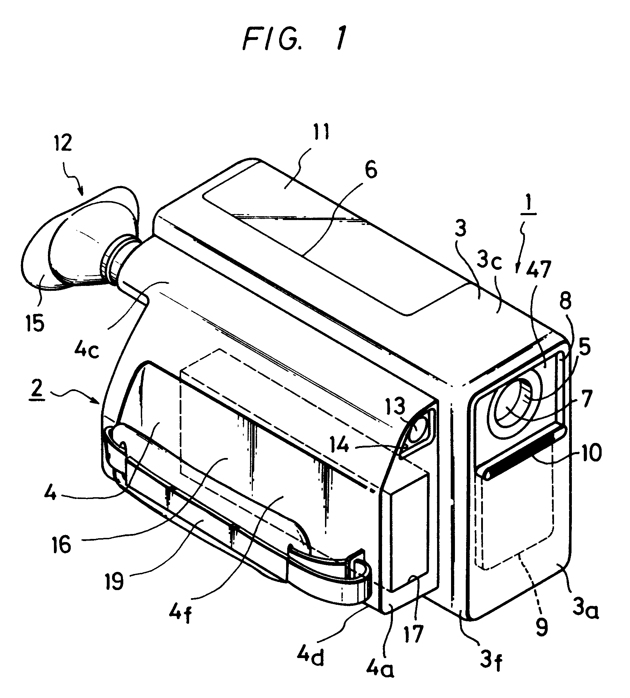

Referring to Figures 1 to 3, a video tape recorder with a built-in camera has a main body 1 and a hand grip portion 2 which are separatable from each other. Housings 3 and 4 respectively of the main body 1 and the hand grip portion 2 are all made of synthetic resin. A main body housing 3 is formed substantially as a rectangular solid shape and also a hand grip portion housing 4 is formed substantially as a rectangular solid shape. In this case, however, the hand grip portion housing 4 is curved from its upper wall 4c through its right side wall 4f to its lower wall 4d so as to fit the palm of the right hand of a user.

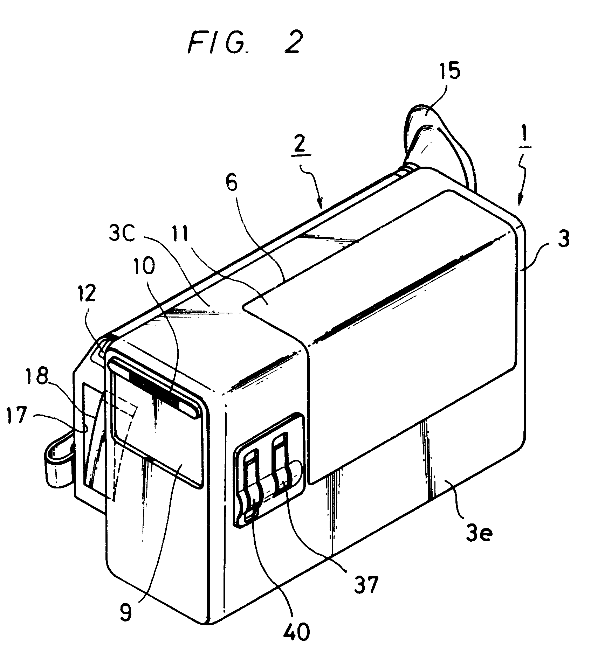

A television (TV) camera section 5 and a video tape recorder (VTR) section 6 are incorporated in the main body housing 3, respectively. Further, a lens window frame 47 is fixed to a lens window opening 8 of a rectangular shape formed through the upper portion of a front wall 3a of the main body housing 3 in opposing relation thereto at a position slightly set back from the front wall 3a. An objective lens 7 of the TV camera section 5 faces to the outside through the window frame 47 attached to the lens window opening 8. A dust-proof cover 9 is attached to the rear side of the front wall 3a so as to be slidable in the vertical direction between the front wall 3a and the window frame 47. The upper end edge of the dust-proof cover 9 protrudes slightly from the window opening 8 of the front wall 3a and thereby forms a knob 10 of the dust-proof cover 9. The cover 9 can be maintained in a click fashion under the state that it is slid downward into the open state as shown in Figure 1 on the state that it is slid upward into the closed state as shown in Figure 2.

A lid 11 having the same configuration and shape as a part of the main body housing 3 is attached to the main body housing 3 from its upper wall 3c to its left side wall 3e. The lid 11 is made freely rotatable relative to the main body housing 3 with its lower edge as a hinge. When the lid 11 is set in the opened state, a video tape cassette (not shown) can be detachably loaded into a cassette compartment portion (not shown) of the VTR section 6.

An optical type view finder 12 is incorporated in the upper portion of the hand grip portion housing 4. An objective lens 13 of the optical view finder 12 faces to the outside through a window opening 14 that is formed through the upper portion of the front wall 4a. To the upper end of a rear wall 4b of the hand grip portion housing 4, there is attached a so-called eye cup 15 made of resilient material. In this case, the optical type view finder 12 is independent of the optical system of the objective lens 7 of the television camera section 5.

A rechargeable battery 16 is incorporated within the hand grip portion housing 4 so as to be replaceable. An opening 17 is formed in the front wall 4a of the hand grip portion housing 4 to permit the rechargeable battery 16 to be replaced. Under the state that the rechargeable battery 16 is taken out through the opening 17, the opening 17 is closed by a lid 18 (see Figure 2). When the rechargeable battery 16 is inserted into the hand grip portion housing 4 through the opening 17, the lid 18 is opened with the tip end of the rechargeable battery 16 and pushed back inside. After the rechargeable battery 16 has been taken out of the hand grip portion housing 4, the lid 18 can automatically be returned and close the opening 17. Figure 2 illustrates the lid 18 that is just in the midst of its rising and falling movement. Further, a strap 19 is attached to the hand grip portion housing 4 in opposing relation to the right side wall 4f. The user can hold the hand grip portion housing 4 with his right hand held between the strap 19 and the hand grip portion housing 4.

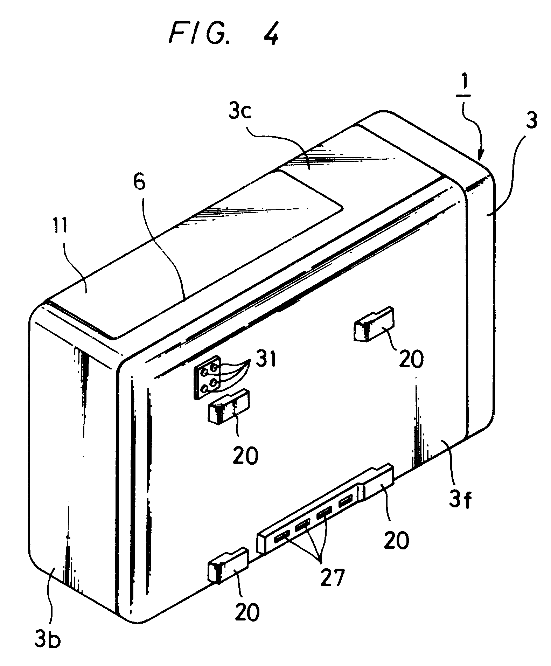

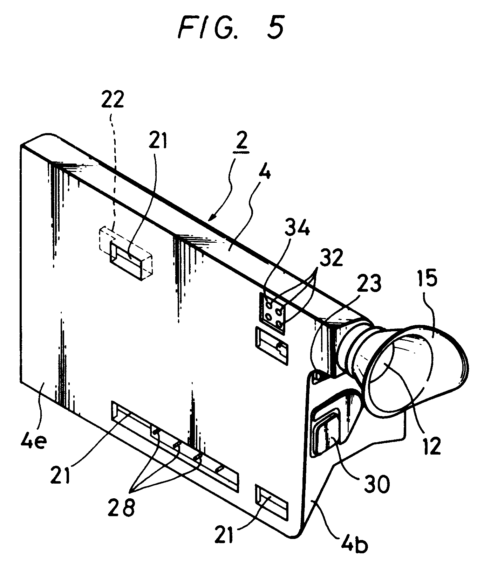

The right side wall 3f of the main body housing 3 and the left side wall 4e of the hand grip portion housing 4 are formed as coupled side walls whereby they can be secured to each other. On these walls 3f and 4e there are provided coupling means, respectively. This will be described with reference to Figures 4 and 5.

Referring to Figures 4 and 5, L-shape hooks 20 are provided on the right side wall 3f of the main body housing 3 at a plurality of locations (4 locations in the illustrated example), each of the hooks 20 facing the front side of the main body housing.

Conversely on the left side wall 4e of the hand grip housing 4, there are formed four recesses 21 in opposing relation to the four hooks 20. Further, in succession to the recesses 21, there are respectively formed engaging recesses 22 which extend to the front side of the hand grip portion housing 4 within the same.

When the respective hooks 20 of the main body housing 3 are engaged with the respective recesses 21 of the hand grip portion housing 4, the right side wall 3f of the main body housing 3 and the left side wall 4e of the hand grip portion housing 4 are closely contacted with each other. Under this state, if the main body housing 3 is slid forward relative to the hand grip portion housing 4, the tip ends of the respective hooks 20 will be engaged in the engaging recesses 22 formed within the respective recesses 21 and the main body housing 3 and the hand grip portion housing 4 will be coupled to each other, that is to say, the main body 1 and the hand grip portion 2 will be coupled with each other.

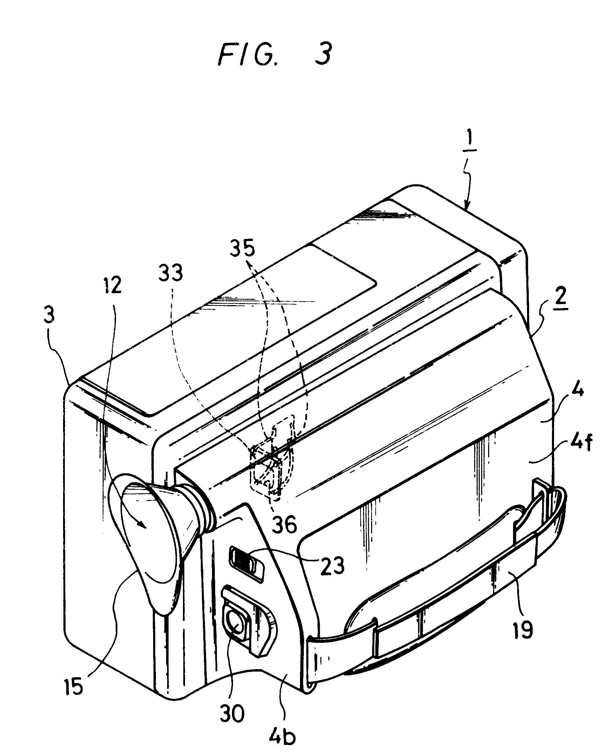

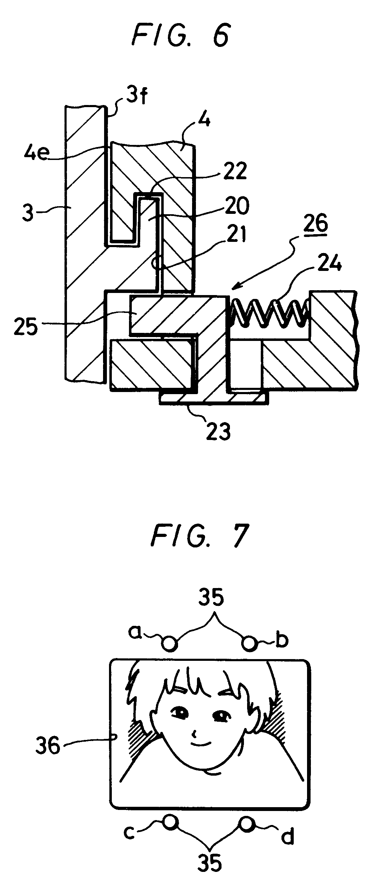

In order to lock the main body 1 and the hand grip portion 2 under the state that they are coupled with each other, locking means (26) is provided as described below. As shown in Figures 3 and 6, a slide 23 which is slidable in the right and left direction is attached to the rear wall 4b of the hand grip portion housing 4. The slide 23 is always slidably biassed to the side of the main body housing 3 by a spring 24 (Figure 6) and the tip of an engaging member 25 connected to the slide 23 projects into the adjacent recess 21. Thus, the hook 20 can be prevented from sliding within the recess 21 by the engaging member 25.

Upon coupling of the main body housing 3 with the hand grip portion housing 4, when the hooks 20 are entered into the recesses 21, the engaging member 25 is moved against the biassing force of the spring 24. Further, as shown in Figure 6, when the hooks 20 have entered into the recesses 22 once, the engaging member 25 protrudes into the recess 21 and thereby the hooks 20 are locked. It is sufficient that such locking means 26 is provided at least within one of the recesses.

From the state shown in Figure 6, if the slide 23 is slid in the opposite direction to the main body housing 3 against the biassing force of the spring 24, the main body housing 3 can be moved backward relative to the hand grip portion housing 4, and the main body housing 3 and the hand grip portion housing 4 can be separated from each other.

On the connection side wall, that is, the right side wall 3f of the main body housing 3, there are formed a plurality of electrical contacts 27 made of a metal plate (see Figure 4), while on the left side wall 4e of the hand grip portion housing 4, there are formed a plurality of electrical contacts 28 formed as conductive pins in opposing relation to the respective contacts 27 (see Figure 5). Accordingly, when the main body housing 3 and the hand grip portion housing 4 are connected with each other as set forth above, the respective contacts 27 and 28 make contact electrically so that from the rechargeable battery 16 located within the hand grip portion housing 4, power current can flow to the television camera section 5 and the VTR section 6 in the main body housing 3. Further, a push switch or push button 30 for a trigger type switch is mounted on the rear wall 4b of the hand grip portion housing 4. The signal generated by operating the push button 30 is supplied through one of the above mentioned contacts 27 and 28 to the main body 1. In practice, when this push button 30 is pushed once, the video tape recorder is placed in the standby mode, while when it is pushed a second time, the magnetic tape is transported and then the recording is carried out.

As Figure 4 shows, an optical type operational status indicating section 31 formed of a plurality of (4 in the illustrated example) light emission elements is mounted on the right side wall 3f - (coupling side wall) of the main body housing 3, while as Figure 5 shows, a light guide 34 is formed at the position facing the optical type operational status indicating section 31 of the main body housing 3.

Specifically, in opposing relation to the respective light emission elements of the optical type operational status indicating section 31, there are formed a plurality of (4 in the illustrated example) window openings 32 and further a rectangular mask 33 is disposed at the focussing position within the optical system of the optical type view finder 12 (see Figure 3). Light guide tubes 35 (optical fibres), each made of a plastics material or glass fibres are each located between the four corners of the mask 33 and the window openings 32. Thus one end of each of the light guide tubes 35 is just engaged into the window openings 32 and hence the end faces thereof are directly opposed to the optical type operational status indicating section 31 of the main body housing 3, while the other ends of the light guide tubes 35 are just engaged in the window openings which are formed through the four corners of the mask 33.

Figure 7 shows an example of a picture that is viewed by the user through the optical type view finder 12. Referring to Figure 7, the end faces of the respective light guide tubes 35 are placed outside a frame 36 of a visual field. Accordingly, when the light emission elements, such as LEDs, constituting the optical type operational status indication section 31 are lit in response to the respective operational status of the TV camera section 5 and the VTR section 6 within the main body 1, each lighting of the light emission elements is indicated within the optical type view finder 12.

An example of the operational status indication will be described with reference to Figure 7, in which respective operational status are designated particularly by reference numerals a to d.

The end face a of the light guide tube is lit when the colour temperature is low such as when a picture is taken indoors. In this case, it is sufficient that a colour filter within the optical system of the TV camera section 5 within the main body 1 is changed to a proper filter. A switch 37 shown in Figure 2 is provided for such switching and the switch 37 is slidably movable up and down.

When the end face b is lit, this indicates that the video tape recorder is in its standby mode. That is, the end face b is lit by pushing the push button 30 once. When the push button 30 is pushed a second time the lighting of the end face b stops and the end face c is lit to indicate that the video tape recorder is set in the operation mode (in the recording mode). The end face d indicates that the amount of light is insufficient. In this case, the lack of light amount can be compensated by the use of lighting equipment. Since means for making the respective light emission elements of the optical operational status indicating section 31 light up, thereby to indicate the above mentioned operational status of the TV camera section 5 and the VTR section 6 within the main body 1, is well known in the art, a detailed explanation thereof will not be made. As an alternative to these light emission elements, it is possible to employ ones having different colours.

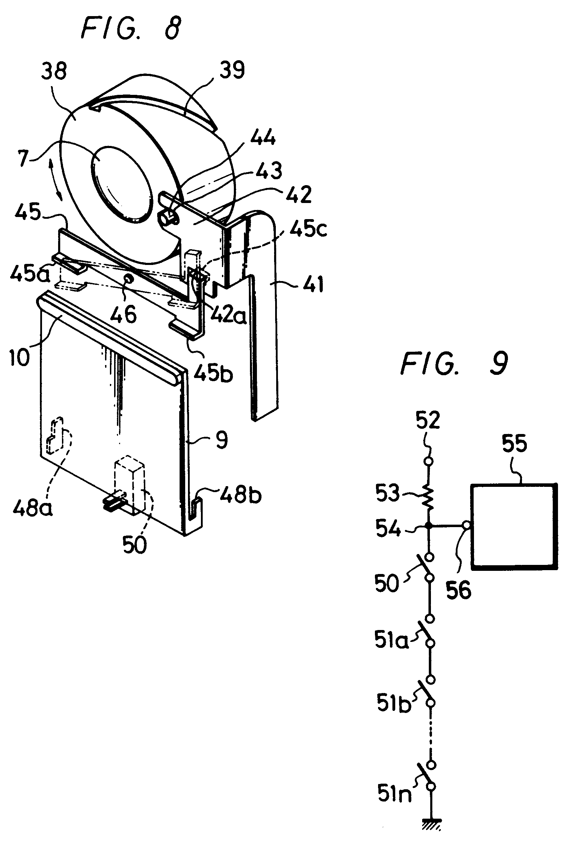

The TV camera section 5 in the main body 1 can switchably take three positions of wide angle lens mode, standard lens mode and telephoto lens mode by moving the objective lens 7 back and forth. The objective lens 7 can be moved back and forth as follows. As shown in Figure 8, into a screw groove 39 formed on the outer periphery surface of a mirror cylinder 38 of the objective lens 7, there is engaged a protrusion (not shown) that protrudes from the inner surface of a fixed cylinder (not shown) which incorporates the mirror cylinder 38 and which guides the same back and forth therealong. On the other hand, as shown in Figure 2, a focus switching lever 40, which is slidable in the up and down direction, is located at the front portion of the left side wall 3e of the main body housing 3. Further, as shown in Figure 8, a part of a connection plate 41 attached to the rear wall of this switching lever 40 is elongate to the front of the mirror cylinder 38 to form an elongate portion 42 and a protrusion 44 protruding from the front surface of the mirror cylinder 38 is engaged with a cut-away or recess 43 formed through the elongate portion 42. When the switching lever 40 is switchably slid to the upper, the neutral and the lower positions, the mirror cylinder 38 is moved back and forth and thereby the optical system of the TV camera section 5 is placed in the telephoto lens mode, the standard lens mode and the wide angle lens mode, sequentially.

Further, as Figure 8 shows, a link 45 is located under the mirror cylinder 38 and this link 45 is pivoted through a shaft 46 to the rear wall of the window frame 47 (shown in Figure 1) that is engaged with the rear portion of the window opening 8 in the main body housing 3 so as to be moved in a seesaw-like fashion. One end of this link 45 is bent to form a bent portion 45c and this bent portion 45c is loosely engaged into a through-hole 42a that is formed through the elongate portion 42 of the connection plate 41. When the switching lever 40 is placed in the neutral (standard) position, the link 45 is placed substantially in the horizontal state as shown by the solid line in Figure 8.

On the other hand, as shown in Figure 8, the dust-proof cover 9 is provided at its left and right portions of the lower end with abutting portions 48a and 48b. When the dust-proof cover 9 is slid upward to shield the front portion of the objective lens 7 as shown in Figure 2, both of these abutting portions 48a and 48b are respectively contacted with left and right lower ends 45a and 45b of the link 45 or opposed thereto with a small clearance.

Accordingly, when the switching lever 40 is slid upward from the normal (neutral) position, the objective lens 7 is placed in the wide angle lens mode and the link 45 is inclined as shown by a two-dot chain line in Figure 8. Under this state, if the dust-proof cover 9 is closed, the abutting portion 48a is abutted against the lower end 45a of the link 45 thereby to rotate the link 45 substantially to the horizontal position as shown by the solid line in Figure 8. Thus, the connection plate 41, or the switching lever 40 is returned to the neutral position, and hence the objective lens 7 is returned to the normal position.

Further, under the state that the dust-proof cover 9 is opened, if the switching lever 40 is slide downward, the link 45 is inclined in the direction opposite to the above mentioned direction and the objective lens 7 is placed in the telephoto lens mode. If under this state the dust-proof cover 9 is closed, the abutting portion 48b is abutted against the lower end 45b of the link 45 and thereby this link 45 is returned substantially to the horizontal state. In other words, the switching lever 40 is returned to the neutral position. In this case, it may be possible that the lower end edge of the elongate portion 42 of the connection plate 41 is pushed upward by the abutting portion 48b.

As described above, when in the non-use mode the dust-proof cover 9 is closed, the optical system of the TV camera section 5 is placed in the standard lens mode so that in the following shooting mode, the picture can be taken in the normal mode so long as the switching lever 40 is not operated.

Within the main body housing 3, a cover opening state detection switch 50 is provided under the dust-proof cover 9. When the dust-proof cover 9 is opened, this switch 50 is switched on, for example.

The switch 50 is connected to other switches 51a, 51b, 51c, ... 51n in series with one another as shown in Figure 9. These switches 51a, 51b, ... are, for example, a tape mis-erase prevention detecting switch, a switch operable by the push button 30 mentioned before and other switches. A DC power source terminal 52 is earthed through a series circuit of a resistor 53 and the above mentioned respective switches 50, 51a, 51b, ... 51n, and a junction 54 between the series circuit of the respective switches and the resistor 53 is connected to a control terminal 56 of a micro-computer 55. This micro-computer 55 is used to control various operational status of the TV camera section 5 and the VTR section 6 and is not operable during a period in which the DC potential (voltage) is applied to its control terminal 56.

Accordingly, if all the switches are turned on, or all the recording conditions are satisfied, the control terminal 56 of the computer 55 is made as a earth potential so that the micro-computer 55 is placed in the operable state.

Since in the video tape recorder having a built-in camera the main body 1 and the hand grip portion 2, which is generally located at the side wall of this main body 1, are formed to be detachable to each other, under this detachable state, the overall thickness thereof can become about one half that of the coupled state. Accordingly, if the main body 1 and the hand grip portion 2 are placed side by side on the same plane, they can be stored and carried in a case such as the attache case that is relatively thin. Hence, a video tape recorder having a built-in camera according to the invention can have the advantage that upon non-use, it can be carried by the user conveniently as a portable type.

Of course, upon use, if the main body 1 and the hand grip portion 2 are contacted with each other at their connection surfaces, they can be coupled with each other mechanically. Then, when the current is supplied from the rechargeable battery 16 to the main body 1, shooting, or recording can be carried out.

**Claims**

1. A video tape recorder having a built-in camera comprising:
    a main body (3) having a video tape recorder (6) and a television camera (5);
    a hand grip portion (2) carrying a battery (16) to supply operational power to the video tape recorder (6) and the television camera (5);
    coupling means (20, 21, 22) detachably to mount the hand grip portion (2) on a side wall (3f) of the main body (3); characterised by the hand grip portion (2) carrying a view finder (12); said mounting being effected by relative sliding of the hand grip in the direction of the side wall; and
    locking means (26) to lock the coupling means (20, 21, 22), the locking means (26) being releasable by a slide (23) that is accessible from the exterior of the hand grip portion (2).

2. A video tape recorder according to claim 1, wherein the main body (3) and the hand grip portion (2) are electrically connected through electrical contacts (27, 28) when the hand grip portion (2) is mounted on the side wall (3f) of the main body (3).

3. A video tape recorder according to claim 2, wherein the hand grip portion (2) includes a recording button (30) which is also electrically connected to the video tape recorder (6) through the electrical contacts (27, 28).

4. A video tape recorder according to claim 1, wherein the view finder (12) of the hand grip portion (2) is an optical type view finder, and operational status of the video tape recorder and the television camera are displayed in the optical type view finder (12).

5. A video tape recorder according to claim 4, wherein indicators (31) for the operational status are mounted in the main body, and lights from the indicators are fed to the optical type view finder thorugh light guides (34).

6. A video tape recorder according to claim 2, wherein indicators (31) for the operational status of the video tape recorder and the television camera are mounted in the main body and lights from the indicators are fed to the view finder by way of light guides.

7. A video tape recorder according to claim 1, wherein the main body includes a slidable lens cover (9) mounted at a front wall (3a) thereof, the lens cover (9) being openable for use.

8. A video tape recorder according to claim 7, wherein the lens cover (9) is coupled to a switch contact (50) and the contact supplies a signal which indicates that the lens cover is opened.

9. A video tape recorder according to claim 8, wherein the view finder (12) of the hand grip portion (2) is an optical type view finder.

**Patentansprüche**

1. Videobandaufnahmegerät mit einer Einbaukamera mit:

   einem Hauptkörper (3) mit einem Videobandaufnahmegerät (6) und einer Fernsehkamera (5),

   einem eine Batterie (16) zum Versorgen des Videobandaufnahmegeräts (6) und der Fernsehkamera (5) mit Betriebsenergie tragenden Handgriffabschnitt (2),

   einer abnehmbaren Kupplungseinrichtung (20, 21, 22) zum Befestigen des Handgriffabschnitts (2) an einer Seitenwand (3f) des Hauptkörpers (3),

   **dadurch gekennzeichnet,**

   daß der Handgriffabschnitt (2) einen Sucher (12) trägt,

   daß die Befestigung durch relatives Verschieben des Handgriffs in der Richtung der Seitenwand bewirkt ist, und

   daß eine Verriegelungseinrichtung (26) zum Verriegeln der Kupplungseinrichtung (20, 21, 22) vorgesehen ist, wobei die Verriegelungseinrichtung (26) durch einen Schieber (23), der vom äußeren des Handgriffabschnitts (2) zugänglich ist, freigebbar ist.

2. Videobandaufnahmegerät nach Anspruch 1, wobei der Hauptkörper (3) und der Handgriffabschnitt (2) durch elektrische Kontakte (27, 28) elektrisch verbunden sind, wenn der Handgriffabschnitt (2) an der Seitenwand (3f) des Hauptkörpers (3) befestigt ist.

3. Videobandaufnahmegerät nach Anspruch 2, wobei der Handgriffabschnitt (2) einen ebenfalls durch die elektrischen Kontakte (27, 28) mit dem Videobandaufnahmegerät (6) elektrisch verbundenen Aufnahmeknopf (30) aufweist.

4. Videobandaufnahmegerät nach Anspruch 1, wobei der Sucher (12) des Handgriffabschnitts (2) ein Sucher optischen Typs ist und Betriebszustände des Videobandaufnahmegeräts und der Fernsehkamera in dem Sucher (12) optischen Typs angezeigt sind.

5. Videobandaufnahmegerät nach Anspruch 4, wobei in dem Hauptkörper Anzeiger (31) für die Betriebszustände befestigt sind und Licht aus den Anzeigern dem Sucher optischen Typs durch Lichtleiter (34) zugeführt ist.

6. Videobandaufnahmegerät nach Anspruch 2, wobei in dem Hauptkörper Anzeiger (31) für die Betriebszustände des Videobandaufnahmegeräts und der Fernsehkamera befestigt sind und Licht aus den Anzeigern dem Sucher durch Lichtleiter zugeführt ist.

7. Videobandaufnahmegerät nach Anspruch 1, wobei der Hauptkörper eine an einer Vorderwand (3a) dieses Körpers befestigte, verschiebbare Linsenabdeckung (9), die beim Benutzen zu Öffnen ist, aufweist.

8. Videobandaufnahmegerät nach Anspruch 7, wobei die Linsenabdeckung (9) mit einem Schaltkontakt (50) gekoppelt ist und der Kontakt ein Signal liefert, welches anzeigt, daß die Linsenabdeckung geöffnet ist.

9. Videobandaufnahmegerät nach Anspruch 8, wobei der Sucher (12) des Handgriffabschnitts (2) ein Sucher optischen Typs ist.

**Revendications**

1. Magnétoscope ayant une caméra intégrée comportant :

   un corps principal (3) ayant un magnétoscope (6) et une caméra de télévision (5);

   une partie de poignée (2) portant une batterie (16) destinée à délivrer l'énergie de fonctionnement au magnétoscope (6) et à la caméra de télévision (5);

   des moyens d'accouplement (20, 21, 22) permettant de monter de façon détachable la partie de poignée (2) sur une paroi latérale (3f) du corps principal (3); caractérisé par la partie de poignée (2) portant un viseur (12); ledit montage étant effectué par coulissement relatif de la poignée dans la direction de la paroi latérale; et

   des moyens de verrouillage (16) destinés à verrouiller les moyens d'accouplement (20, 21, 22), les moyens de verrouillage (26) pouvant être libérés par un curseur (23) qui est accessible de l'extérieur de la partie de poignée (2).

2. Magnétoscope selon la revendication 1, dans lequel le corps principal (3) et la partie de poignée (2) sont électriquement reliés par l'intermédiaire de contacts électriques (27, 28) lorsque la partie de poignée (2) est montée sur la paroi latérale (3f) du corps principal (3).

3. Magnétoscope selon la revendication 2, dans lequel la partie de poignée (2) comporte un bouton d'enregistrement (30) qui est également électriquement relié au magnétoscope (6) par l'intermédiaire des contacts électriques (27, 28).

4.  Magnétoscope selon la revendication 1, dans lequel le viseur (12) de la partie de poignée (2) est un viseur du type optique, et des états opérationnels du magnétoscope et de la caméra de télévision sont affichés dans le viseur de type optique (12).

5.  Magnétoscope selon la revendication 4, dans lequel des indicateurs (31) pour les états opérationnels sont montés dans le corps principal, et des lumières provenant des indicateurs sont amenées vers le viseur de type optique au moyen de guides de lumière (34).

6.  Magnétoscope selon la revendication 2, dans lequel des indicateurs (31) pour les états opérationnels du magnétoscope et de la caméra de télévision sont montés dans le corps principal et des lumières provenant des indicateurs sont amenées vers le viseur au moyen de guides de lumière.

7.  Magnétoscope selon la revendication 1, dans lequel le corps principal comporte un cache de lentille coulissant (9) monté sur une paroi avant (3a) de celui-ci, le cache de lentille (9) pouvant être ouvert pour l'utilisation.

8.  Magnétoscope selon la revendication 7, dans lequel le cache de lentille (9) est couplé à un contacteur (50) et le contacteur délivre un signal qui indique que le cache de lentille est ouvert.

9.  Magnétoscope selon la revendication 8, dans lequel le viseur (12) de la partie de poignée (2) est un viseur du type optique.

# FIG. 1

FIG. 2

FIG. 3

## FIG. 4

## FIG. 5

# FIG. 6

# FIG. 7

FIG. 8

FIG. 9